Europäisches Patentamt

European Patent Office

Office européen des brevets

(19)

(11)  **EP 1 381 181 A1**

(12)  **EUROPEAN PATENT APPLICATION**

(43) Date of publication:
**14.01.2004  Bulletin 2004/03**

(51) Int Cl.$^7$: **H04L 1/18**

(21) Application number: **02291720.7**

(22) Date of filing: **09.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **MOTOROLA, INC.**
**Schaumburg, IL 60196 (US)**

(72) Inventors:
• **Vialle, Sandrine**
  **75015 Paris (FR)**

• **Vivier, Guilaume**
  **75013 Paris (FR)**

(74) Representative: **Wharmby, Martin Angus**
  **Motorola Centre de Recherche,**
  **Parc Technologique de St. Aubin,**
  **Route de L'Orme au Merisier,**
  **Immeuble Columbia**
  **91190 Gif-sur-Yvette (FR)**

(54)  **Communication system and method with hybrid ARQ packet combining**

(57)  A method (400) for receiving one or more data packets in a data communication system (200) includes the steps of receiving one or more data packets at a receiving unit and storing the one or more received data packets at the receiver unit. At the receiver unit, one or more subsequent data packets are received (410) and a metric relating to a similarity between the received one or more data packets and the one or more stored data packets is calculated (420). These values are compared (430), at the receiver unit, to a threshold value. The receiving unit then determines whether the received one or more data packets is one or more new data packets or one or more re-transmitted data packets.

This allows the system to blindly detect if an incoming data packet, received at a receiving unit, is a new data packet or a re-transmitted data packet, thereby enabling a SR H-ARQ decoding to be utilised without affecting bandwidth utilisation.

FIG. 4

EP 1 381 181 A1

## Description

## Field of the Invention

This invention relates to wireless communication systems, and particularly to communication services based on packet data transmissions. The invention is applicable to, but not limited to, use of automatic re-transmission requests in such systems.

## Background of the Invention

Third generation wireless systems, presently being designed for implementation in the near future, have as a requirement the support of speech and data. Different types of data services will be available with different Quality of Service (QoS) requirements, particularly in terms of error rate and delay.

Typically, these services can be divided into two groups, real-time and non-real-time. The real-time services typically require a low average data packet delay, arranged such that they can cope with a certain error rate. On the other hand, the non-real-time services typically require some limitation against delay, but often need a very low error rate.

Real-time services have been traditionally used only with Forward Error Correction (FEC) mechanisms that guarantee a bounded delay but deliver data with an error rate depending on channel conditions (which in wireless channels are highly variable). However, these services can only operate up to a maximum error rate. When this error-rate value is exceeded, even with a low delay, the service is not delivered.

Conversely, non real time services usually tolerate variable and high delays but cannot handle high error rate. However, when delays become too high, the risk of the connection being broken is increased.

In the field of this invention, it is known to use various data correction mechanisms. In particular, for wireless communication systems, convolutional codes are well known and are widely used. Recently, a novel class of FEC data packet transmissions, referred to as 'turbo-codes', has appeared. These codes offer very good protection for an acceptable complexity and outperform all classical coding schemes.

A first known correction mechanism, for correcting received data packets corrupted during transmission, uses only forward error correction (FEC) coding. However, although an FEC mechanism guarantees a low delay and low delay variation, it cannot guarantee a low error rate.

A second known correction mechanism uses re-transmission of erroneous data packets. This is achieved via a feedback channel from the receiver to the transmitter to indicate whether the data packet has been correctly received or not. This scheme is called Automatic Repeat reQuest (ARQ) and is widely used in wired communication systems since it provides an error rate as low as needed.

When used over a wireless channel, which encounters a much higher data packet error probability, ARQ is likely to lead to very poor transmission performance. For instance, this poor performance results from, say, the same data packet requiring a large number of re-transmissions to be successfully received. To mitigate this effect, ARQ is usually used with a limited maximum number of re-transmissions, which bounds the delay but does not guarantee the error rate.

There are three basic types of ARQ schemes, which can be associated to the packet buffering capacities at the transmitter and receiver of the data communication unit. At the transmitter, a buffer can be used to store unacknowledged packets for possible re-transmissions. At the receiver, a buffer can be used to correctly store received packets, where the received data packets cannot be released in the correct order until packets ahead in the sequence are successfully received.

A 'Stop and Wait' (SW) scheme corresponds to a transmitter capable of memorising only one data packet at a given time. When the transmitter is able to store several data packets, it is able to send several data packets consecutively.

However, in the case of a receiver not being able to store data packets, where the leading data packet is erroneous, the subsequently received data packets will be dropped, as there is no possibility of re-ordering them. As a result, they must be re-transmitted. This is generally referred to as the 'Go Back N [packets]' (GBN) scheme.

The last scheme uses two buffers: the first buffer at the transmitter side for possible re-transmissions, and the second buffer at the receiver, for re-sequencing successfully received packets. This is commonly referred to as the Selective Repeat (SR) ARQ scheme.

The SR scheme is known to be the most efficient scheme, as only erroneous data packets are re-transmitted. However, a sequence number is required to be communicated to identify the erroneous block. Furthermore, the capacity of the communication link is not wasted (as would be the case in a SW scheme where the transmitter must wait for an acknowledgement before releasing a new packet). Typically, to fully utilise the available channel capacity, the SR ARQ transmitter needs to send a number of data packets whilst awaiting a response (or lack of it in this case).

FEC used alone does not guarantee the delivered packet error rate, whereas ARQ with an unlimited number of re-transmissions does not provide a bounded delay. As a result, FEC and ARQ are often used jointly. This is commonly referred to as Hybrid ARQ (H-ARQ). H-ARQ is known as an efficient mechanism to provide error-free or low error rate transmissions in a wireless system, where the information flow is segmented into data packets. Different types of H-ARQ exist.

In H-ARQ type I, the only difference when compared to pure ARQ is located in the FEC coding. The correction code is optimised to correct the most likely transmission errors, and the detection code is optimised to detect those errors that rarely occur and are the most difficult to correct. When a data packet with errors is received, it is automatically discarded and a request for re-transmission is sent. The transmitter will then retransmit exactly the same packet. The inconvenience of the type I hybrid ARQ scheme is related to the choice of the FEC. A too strong protection leads to a waste of valuable communication resource when the communication channel is good, whereas a limited overhead is useless when the channel quality becomes poor, and only re-transmissions are able to provide an acceptable quality.

The concept in type II ARQ scheme is to transmit additional parity-check bits for correction only when they are needed. When a data packet is received with errors, it is not discarded but combined with additional bits provided by the transmitting side. Different methods are available. One of the easiest methods consists of repeating the same coded packet and to combine it with the previous transmissions in order to improve the FEC decoding process. Furthermore, an incremental redundancy method may be used consisting of transmitting additional redundancy bits, to improve the likelihood of a successful decoding operation, until the decoding is successful.

It should be noted that H-ARQ schemes often require additional signalling information in order to indicate which data packets are being transmitted and for which data packet(s) is/are used to address any additional redundancy. This signalling consumes bandwidth.

Only those schemes based on SW may not require this specific signalling at the cost of poorer performance since the transmitter must suspend its transmission while it waits for the acknowledgment of the successful decoding of the previously received packet. Moreover, in such a scheme, a single transmitter instance cannot transmit several data packet flows in parallel, see US20020075842A1, by Classon, Cudak, titled "Multichannel stop and wait ARQ communication method and apparatus".

H-ARQ has been identified by the third generation partnership project (3GPP) as a suitable enhancement to the universal mobile telecommunication system (UMTS). H-ARQ is currently planned for inclusion in release 5 and further releases of the UMTS standard. In particular, the UMTS Terrestrial Radio Access (UTRA) High Speed Downlink Packet Access (Release 5) aspect of the UMTS standard has defined a H-ARQ scheme based on SW for its simplicity. However, in order to avoid a performance collapse, the 3GPP standardization body had to change the frame structure and consider shorter frame sizes.

Hence, a wireless subscriber unit, termed user equipment (UE) in UMTS parlance, employing H-ARQ (in the case of downlink transmission) needs to store 'soft' samples for each partially received data packet. In this context, the expression "soft samples" may be understood to encompass samples stored containing information about the perturbations met by the symbols during the transmission, such as thermal noise or fading. "Soft" should be viewed in contrast to "hard" demodulated symbols where only the most probable value of the symbol is decided in a finite known alphabet (the alphabet used by the transmitter). Since soft samples should represent accurately the channel perturbations, they need to be quantized with a high number of bits. Thus, UE memory requirements are typically substantial. Of course, the same consideration applies for the base stations (node-Bs), for the uplink transmissions. The choice of H-ARQ mechanism is therefore very important.

More importantly, H-ARQ requires that the receiver must know the sequence number prior to combining separate re-transmissions. The sequence number must be encoded separately from the data and must be very reliable to overcome whatever errors the channel conditions have induced in the data. Hence, a strong block code is needed to encode the sequence information - increasing the bandwidth required for the signalling aspect.

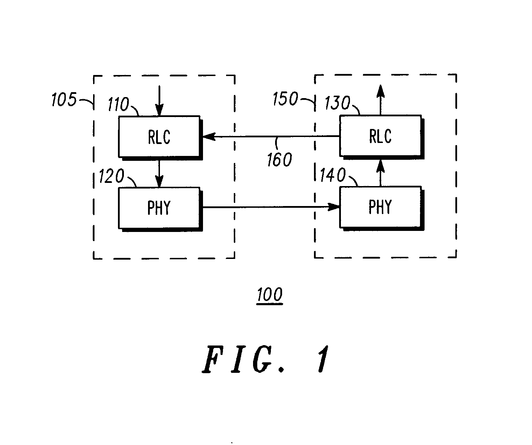

FIG. 1 represents the basic model 100 of a communication system. The physical layers (PHY) 120, 140 of the UE 105 and Node B 150 are responsible for coding/decoding the information packets, whereas the Radio Link Control (RLC) layers 110, 130 manage the transmission and any re-transmission of the data packets. In a traditional OSI layered structured, as well known in the art, there is no information exchange between the RLC and PHY layers except of course the data packet to be transmitted. It is usually the responsibility of the RLC layer to check (thanks to a cyclic redundancy check (CRC)) if the packet is erroneous or not. A feedback path is shown whereby acknowledgement ("ack") or no acknowledgement ("nack") signals are sent by the receiver to the transmitter to indicate whether the received data packet has been successfully decoded. Note that for the sake of clarity, the Medium Access Layer (MAC) is not represented in FIG.1.

The inventors of the present invention have both recognised and appreciated problems with the above scenario, when applied to a SR scheme. In particular, the PHY layer 140 in the receiver does not know the data packet characteristic that it is currently decoding. Thus, it does not know if the incoming data packet is a new data packet or a previously (re-)transmitted data packet.

Moreover, in the state of the art H-ARQ scheme, specific signalling is transmitted in parallel with the information bits in order to inform the receiver whether the incoming data corresponds to a new data packet or to re-transmitted information.

In an H-ARQ scheme, the receiver's PHY layer are likely to apply different decoding strategies according to the characteristic of the incoming data packet (new one or additional information). Therefore, the receiver's PHY layer 'must' be aware of the status of the incoming data packets, i.e. whether the received data packet is a new packet or a re-transmitted data packet. If it is a re-transmitted packet, the receiver Physical layer should associate the re-transmitted packets to the corresponding previously stored packets.

Moreover, in a type-II H-ARQ scheme, the Rx PHY layer should store all the previous erroneous packets in order to be able to combine these packets with new incoming information that assists in the decoding process.

A need therefore exists for an improved data packet correction mechanism, preferably one that utilises the advantages of H-ARQ with turbo or convolutional codes as the FEC, which alleviates the aforementioned problems with known correction mechanisms, and especially reduces the amount of associated signalling.

**Statement of Invention**

In accordance with a first aspect of the present invention, there is provided a method for receiving one or more data packets in a data communication system, as claimed in Claim 1.

In accordance with a second aspect of the present invention, there is provided a communication system, as claimed in Claim 14.

In accordance with a third aspect of the present invention, there is provided a communication unit, as claimed in Claim 15.

In accordance with a fourth aspect of the present invention, there is provided a storage medium storing processor-implementable instructions, as claimed in claim 16.

In accordance with a fifth aspect of the present invention, there is provided a communication unit as claimed in Claim 17.

Further aspects of the present invention are as claimed in the dependent Claims.

In summary, a blind recognition of re-transmitted data packets, preferably in a SR-based H-ARQ communication link, is described. The mechanism determines a metric relating to a similarity between one or more received data packets and one or more previously stored, and unsuccessfully decoded, data packets. The metric is then compared to a threshold level to determine whether the received one or more data packets is one or more new data packets or one or more re-transmitted data packets.

The proposed error correction mechanism can be used with any system supporting a feedback channel and employing turbo-coded or convolutional coded FEC operation or more generally any system supporting FEC with soft input soft output decoding process. This is achieved by incorporating simple additional processing at the receiver. Advantageously, no additional signalling is required beyond the standard acknowledgement.

**Brief Description of the Drawings**

FIG. 1 illustrates a basic model of the lower layers of a communication system, according to the known OSI model. Exemplary embodiments of the present invention will now be described, with reference to the accompanying drawings, in which:

FIG. 2 illustrates a packet data communication system, adapted to support the inventive concepts in accordance with the preferred embodiment of the present invention;

FIG. 3 illustrates a packet data communication unit adapted in accordance with the preferred embodiment of the present invention;

FIG. 4 illustrates a flowchart of the receiver's function, adapted in accordance with the preferred embodiment of the present invention; and

FIG. 5 illustrates a graph showing how a threshold value can be incorporated into the preferred embodiment of the present invention.

**Description of Preferred Embodiment**

It will be understood by a skilled artisan that the invention could be used both for communications between a base transceiver station (Node-B in UMTS parlance) and a subscriber unit (user equipment (UE) in UMTS parlance). Although the preferred embodiment of the present invention is described with respect to a downlink transmission case, it is within the contemplation of the invention that the inventive concepts are equally applicable to an uplink transmission case. The invention is applicable to any linear modulation scheme.

Moreover, the invention allows association of the re-transmitted data packet to the correct, previously received data packet, stored among the other erroneous packet memorised by the RX PHY. Advantageously, no specific signalling is required.

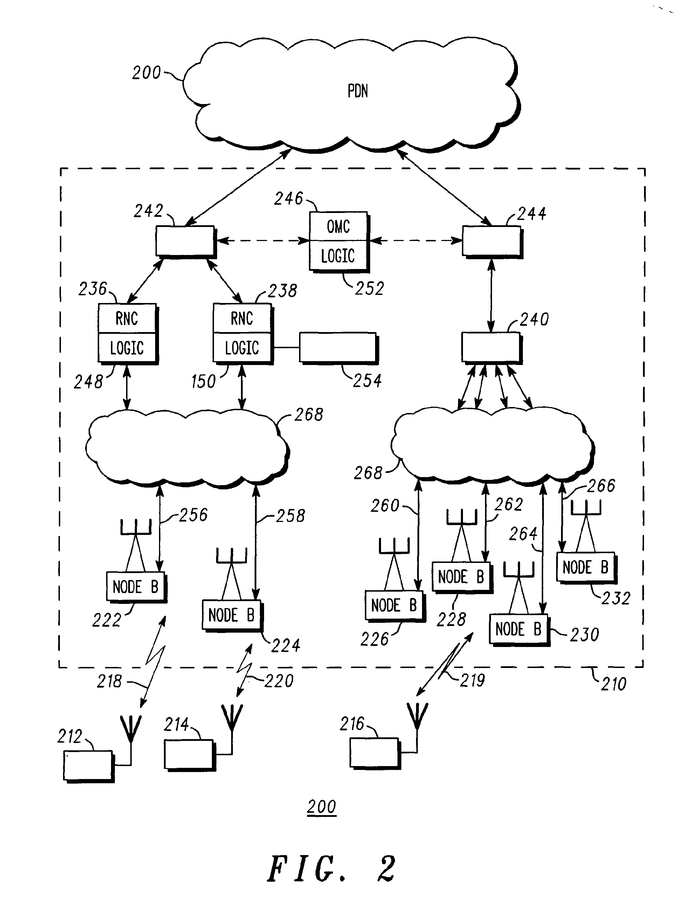

Referring now to FIG. 2, a cellular-based communication system 200 is shown in outline, in accordance with a preferred embodiment of the invention. In the preferred embodiment of the invention, the cellular-based communication system 100 is compliant with, and contains network elements capable of operating over, a UMTS air-interface. In particular, the invention relates to the Third Generation Partnership Project (3GPP) specification for wide-band code-division multiple access (WCDMA) standard relating to the UTRAN radio Interface (described in the 3G TS 25.xxx series of specifications). However, it is within the contemplation of the invention that the inventive concepts hereinafter described are equally applicable to other wireless communication systems, for example, GPRS (Generalized Packet Radio Service), or Edge, or 802.11x family of systems.

A plurality of subscriber terminals (or user equipment (UE) in UMTS nomenclature) 212, 214, 216 communicate over radio links 218, 219, 220 with a plurality of base transceiver stations, referred to under UMTS terminology as Node-Bs, 222, 224, 226, 228, 230, 232. The system comprises many other UEs and Node Bs, which for clarity purposes are not shown.

The wireless communication system, sometimes referred to as a Network Operator's Network Domain, is connected to an external public data network (PDN) 234, for example the Internet. The Network Operator's Network Domain (described with reference to both a 3rd generation UMTS and a 2nd generation GSM system) includes:

(i) A core network, namely at least one Gateway GPRS Support Node (GGSN) 244 and/or at least one Serving GPRS Support Nodes (SGSN) (not shown); and
(ii) An access network, namely:

(ai) an UMTS (or GPRS) Radio network controller (RNC) 236-240; or
(aii) Base Site Controller (BSC) in a GSM system and/or
(bi) an UMTS (or GPRS) Node B 222-232; or
(bii) a Base Transceiver Station (BTS) in a GSM system.

The GGSN 244 is responsible for GPRS (or UMTS) interfacing with a Public Data Network (PDN) such as the Internet 234. A gateway mobile switching centre (GMSC) (not shown) provides a gateway between a UMTS system and a public switched telephone network (not shown). A SGSN performs a routing and tunnelling function for traffic within say, a GPRS core network, whilst a GGSN 244 links to external packet networks, in this case ones accessing the GPRS mode of the system

The Node-Bs 222-232 are connected to external networks, through base station controllers, referred to under UMTS terminology as Radio Network Controller stations (RNC), including the RNCs 236, 238, 240 and mobile switching centres (MSCs), such as MSC 242 (the others are, for clarity purposes, not shown) and SGSN 244 (the others are, for clarity purposes, not shown).

Each Node-B 222-232 contains one or more transceiver units and communicates with the rest of the cell-based system infrastructure via an I$_{ub}$ interface, as defined in the UMTS specification.

Each RNC 236-240 may control one or more Node-Bs 222-232. Each MSC 242 provides a gateway to the external network 234. The Operations and Management Centre (OMC) 246 is operably connected to RNCs 236-240 and Node-Bs 222-232 (shown only with respect to Node-B 226 for clarity). The OMC 246 administers and manages sections of the cellular telephone communication system 200, as is understood by those skilled in the art.

In the preferred embodiment of the invention, a number of UEs 212-216 and/or at least one Node-B 222-232 have been adapted, to offer, and provide for, reception of ARQ-based data communication, where a receiving unit is able to detect when a received data packet is a re-transmitted data packet, or a new data packet, as described in greater detail later.

The user of the UE 212-216 may receive (and/or transmit), at his/her request, communication services transmitted from (and/or received by) the Node-B 232. In order to ensure an improved data packet error rate, whilst supporting advantageous coding and re-transmission schemes such as SR H-ARQ having negligible impact on communication bandwidth resource, the node B 232-236 and the UE 212-216 employ the following error correction mechanism.

The communication unit (UE and/or Node B) calculates a metric relating to a similarity between one or more received data packets and one or more previously stored (and unsuccessfully decoded) data packets. The metric is then compared to a threshold value and a determination made as to whether the received one or more data packets is/are one or more new data packets or one or more re-transmitted data packets. This mechanism is preferably adaptive to channel conditions and user requirements in terms of packet error rate and delay.

More particularly, for the avoidance of doubt, in this embodiment the above elements may be adapted to implement the present invention in either, or both, downlink and up-link communication channels.

It is also within the contemplation of the invention that such adaptation of the physical layer (air-interface) elements may be alternatively controlled, implemented in full or implemented in part by adapting any other suitable part of the communication system 200. For example, equivalent elements such as intermediate fixed communication units in other types of systems may, in appropriate circumstances, be adapted to provide or facilitate the ARQ mechanism as described herein.

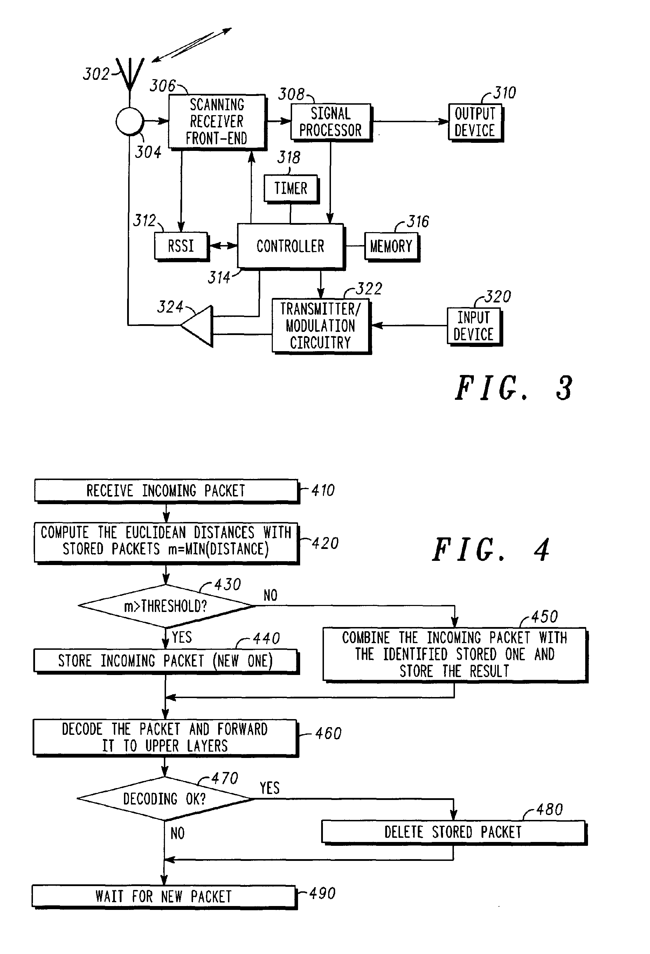

Turning now to FIG. 3, there is shown a block diagram of a wireless UE 300 adapted to support the inventive concepts of the preferred embodiments of the present invention. As known in the art, and replicated here for completeness, the UE 300 contains an antenna 302 preferably coupled to a duplex filter or circulator 304 that provides isolation between receive and transmit chains within the UE 300. The receiver chain, as known in the art, includes scanning receiver front-end circuitry 306 (effectively providing reception, filtering and intermediate or base-band frequency conversion). The scanning front-end circuit is serially coupled to a signal processing function 308. An output from the signal processing function is provided to a suitable output device 310, such as a screen or flat panel display. The receiver chain also includes received signal strength indicator (RSSI) circuitry 312, which in turn is coupled to a controller 314 for maintaining overall UE control. The controller 314 is also coupled to the scanning receiver front-end circuitry 306 and the signal processing function 308 (generally realised by a DSP) .

The controller 314 may therefore receive bit error rate (BER) or frame error rate (FER) data from recovered information. The controller is also coupled to a memory device 316 that stores operating regimes, such as decoding/encoding functions, synchronisation patterns, code sequences and the like.

For completeness, as regards the transmit chain, this essentially includes an input device 320, such as a keypad, coupled in series through transmitter/modulation circuitry 322 and a power amplifier 324 to the antenna 302. The transmitter/modulation circuitry 322 and the power amplifier 324 are operationally responsive to the controller. Furthermore, a timer 318 is operably coupled to the controller 314 to control the timing of operations (transmission or reception of time-dependent signals) within the UE 300. Of course, the various components within the UE 300 can be realised in discrete or integrated component form, with an ultimate structure therefore being merely an arbitrary selection.

In accordance with the preferred embodiment of the invention, the processor function 308, which may be a baseband (back-end) signal processing receiver integrated circuit in other embodiments, has been adapted to incorporate the inventive concepts described below. In practice, the signal processing function, in the context of the present invention, will perform numerous signal processing tasks, such as: symbol timing recovery, demodulation, decoding, burst building, de-multiplexing, de-interleaving, re-ordering, etc.

In particular, the decoding function in the signal processing function 308 has been adapted to compare a received data packet with a number of previously stored and unsuccessfully decoded data packets, and calculate a metric relating to a similarity between the one or more received data packets and one or more of previously stored and unsuccessfully decoded data packets. The preferred metric is a calculation of a Euclidean distance therebetween. In this regard, memory device 316 stores data relating to these previous, unsuccessfully decoded data packets for use in calculating the Euclidean distance with the latest received data packet.

The memory device 316 has also been adapted to store a threshold value for use in determining the type of received data packet. The signal processing function 308 has been further adapted to compare the respective Euclidean distance calculations with the threshold value stored in the memory device 316, to determine a type of received data packet, i.e. whether the data packet is a new data packet or a re-transmitted data packet.

The various adapted components within the node-Bs and/or UEs such as UE 300 can be realised in discrete or integrated component form. More generally, the functionality associated with decoding of received data packets and calculating Euclidean distances with other previously stored data packets may be implemented in a respective communication unit in any suitable manner. For example, new apparatus may be added to a conventional Node-B or UE, or alternatively existing parts of a conventional communication unit may be adapted, for example by reprogramming one or more processors therein. As such, the required adaptation, for example the dynamic adaptation of the threshold value in the enhanced embodiment of the present invention, may be implemented in the form of processor-implementable instructions stored on a storage medium, such as a floppy disk, hard disk, PROM, RAM or any combination of these or other storage multimedia.

Notably, irrespective of whether the receiving unit successfully decodes or not the received data packet, no acknowledgement ("ack") or non-acknowledgement ("nack") message of the additional information is returned to the transmitting unit.

Referring now to FIG. 4, a flowchart illustrates the preferred embodiment of the present invention. A receiver receives one or more data packet, in step 410. For these one or more data packets, the receiver calculates the Euclidean distance between the received data packet and all previously stored data packets, as shown in step 420. The calculation and comparison of the respective "Euclidean distances" of the data packets are described below.

In this regard, the receiver calculates the minimum distance (m) and compares the calculated distance to a previously determined threshold. If the minimum distance (m) is below this threshold, in step 430, then the incoming data packet is assumed a re-transmitted data packet. Following a determination that the incoming data packet is a re-transmitted data packet in step 430, the receiver combines, in step 440, the received data packet with the data packet identified as the closest data packet (in a Euclidean distance sense) in step 430. The receiver then stores the new combination and decodes the combined data packet, to provide an improved chance of correctly decoding the data contained therein.

Following a determination that the incoming data packet is a not a re-transmitted data packet in step 430, but a new data packet, the new data packet is stored, in step 450 and the data packet decoded in step 460. If the data packet is decoded successfully, it is preferably deleted from the receiver's storage element, in step 470, to save on the UE's memory space. If the data packet is not decoded successfully, it remains stored in the receiver's storage element, and the receiver waits to receive a new data packet, in step 480.

The preferred embodiment of the present invention proposes the use of a "Euclidean distance" calculation. However, it is within the contemplation of the invention that any other mechanisms that provide soft values to feed a decoder can be used.

In order to highlight how the threshold value is selected, a mobile environment is modelled as a Rayleigh fading channel with perfect interleaving. In calculating the Euclidean distance between received data packets and previously stored packets, let us denote the following:

$(r_1, ... r_N)$ as an $N$-bit transmitted coded packet;
$(m_{11}, ...., m_{1N})$ as the first memorised $N$-bit packet;
$(m_{k1}, .... , m_{kN})$ as the $k^{th}$ memorised $N$-bit packet.

The distance between the received data packet and the $k^{th}$ memorised data packet may therefore be denoted by:

$$d_k^2 = \sum_{i=1}^{N} \left| r_i - m_{ki} \right|^2 \qquad [1]$$

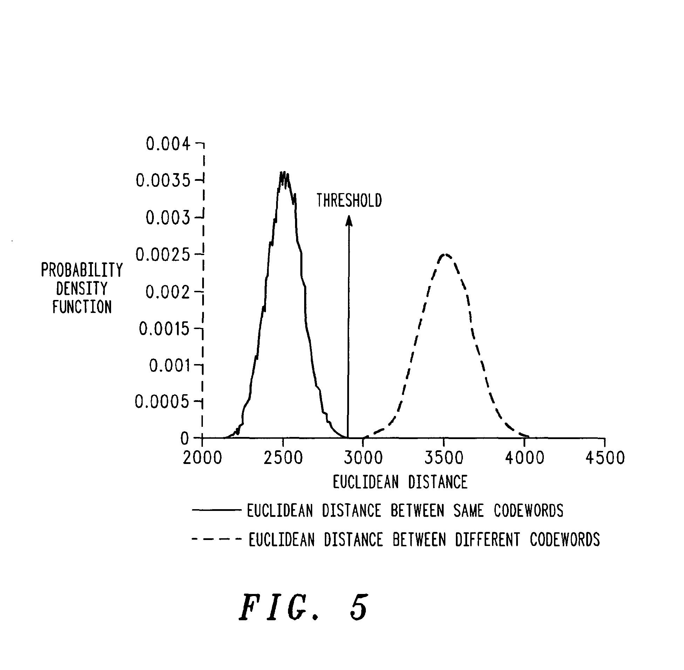

In the derivation of the distance calculation, two cases must be considered, leading to two types of random variables. The first random variable, denoted X, corresponds to the case of re-transmitted data packets. In contrast, the second random variable corresponds to the arrival of new data packets. On average, the calculated distances in the first case are smaller than in the second case, as depicted in FIG. 5.

Referring now to FIG. 5, probability density functions (pdf) of Euclidean distances between incoming and stored packets are illustrated, in accordance with the preferred embodiments of the present invention. Moreover, FIG. 5 shows that the pdf exhibits a Gaussian response using a UMTS Turbo-code R=1/3 N=960 bits, with the signal to noise level Eb/No = 1.5 dB.

Those skilled in the art will recognise that this can be explained due to the central limit theorem. Therefore, in accordance with the preferred embodiment of the present invention, the threshold is preferably set between the two pdfs. For that purpose, we derive the analytical values of mean and standard deviation of the resultant random variable X.

$$E[X] = N \left( 2 - \frac{\pi}{2} + 2N_0 \right) \qquad [2]$$

$$\sigma^2 = E[X^2] - E[X] = 4N(N-1)\left(1 + 2N_0\left(1 - \frac{\pi}{4}\right) - \frac{\pi}{2} + N_0^2 + \frac{\pi^2}{16}\right) + N\left(8 - \frac{5\pi}{2} + 2N_0(11 - 3\pi) + 12N_0^2\right)$$

$$[3]$$

Where $N_o$ is the noise variance per component.

Notice that for a Gaussian random variable, G, it is well known that the probability of having a value g greater than the 'mean + $n\sigma$' value tends to zero when $n$ increases. For instance, when $n$=3 we have the probability:

$$P(x > E[X] + n\sigma) \approx 10^{-3} \qquad [4]$$

Let us denote the threshold as 'T'. Based on the previous remarks, it is proposed to set:

$$T = E[X] + n\sigma. \qquad [5]$$

In the proposed algorithm, when the calculated distance is less than the threshold 'T'; it is decided that the data packet is a re-transmitted data packet, as explained with respect to FIG. 4. Thus, the selection of the threshold position influences the probability of misdetection of whether the received data packet is a new or a re-transmitted data packet, i.e. either the probability in detecting a new data packet when it is a re-transmitted data packet, where 'T' is set too low or the probability in detecting a new data packet when it is a re-transmitted data packet, where 'T' is set too high.

In the H-ARQ context, the inventors of the present invention have recognised that it is better to minimise the risk of detecting a re-transmitted data packet when a new data packet is transmitted.

Therefore, in accordance with the preferred embodiment of the present invention, it is proposed to use a value of 3.5$\sigma$ to set the threshold value 'T'. This value has been determined as working for all typical cases, i.e. convolutional and turbo codes used in UMTS. In an enhanced embodiment of the present invention, the communication units are configured to dynamically adjust the value of the threshold, taking into account, for example, the code properties and the signal to noise ratio (SNR) on the communication channel.

Alternatively, between the simplest embodiment of the invention where the fixed value of 3.5$\sigma$ is used and the more complex enhanced embodiment of the present invention that takes into account the code properties and the SNR, the following solution is preferably applied for use in a UMTS context:

   (i) To use 3.5$\sigma$ for a turbo code for packet lengths of less than 512 bits (information bits, before the 1/3 encoding),
   (ii) To use 4$\sigma$ for a turbo code for packet lengths of greater than 512 bits, and
   (iii) To use 4$\sigma$ for a convolutional code.

An important function of the aforementioned preferred embodiment resides in its capability to identify correctly a new data packet from a previously transmitted data packet. Furthermore, it is important to determine accurately the corresponding stored data packet, in the case of a re-transmitted data packet.

Let us therefore denote:

   $P_{e1}$: as the probability in being able to detect a re-transmitted packet, given that a new packet has been transmitted.
   $P_{e2}$: as the probability in being able to detect a new packet, given that a re-transmitted data packet has been transmitted.
   $P_{e3}$: for a re-transmitted data packet, the probability of mis-selecting the corresponding stored packet.

Table 1, illustrated below, indicates the measured performance for a Turbo code, R=1/3, g=13, 15 and a packet size of 320 information bits, when implementing the inventive concepts described herein. It is assumed that ten packets are stored in the receiver. It can be seen that longer data packet sizes provide an improvement in performance.

Table 1.

| SNR (dB) | 0 | 0.5 | 1 | 1.5 | 2 |
|---|---|---|---|---|---|
| $P_{e1}$ | 5.46e-2 | 1.18e-2 | 1.8e-3 | 2e-4 | 1.25e-5 |
| $P_{e2}$ | 5.49e-4 | 5.49e-4 | 5.49e-4 | 4.99e-4 | 4.99e-4 |
| $P_{e3}$ | 0 | 0 | 0 | 0 | 0 |

As mentioned above, an SR scheme typically requires a robust signalling mechanism, which inherently requires additional bandwidth. Advantageously, the inventive concepts hereinbefore described allow a simple use of SR H-ARQ schemes when the same data packet is re-transmitted without any additional requirements in terms of signalling.

In order to illustrate the gain provided by the preferred embodiment described above, let us consider its use in the described UMTS scenario. A typical number of data packets that could be stored in the receiver (where soft values are stored) is ten. In order to identify these ten data packets, as well as to indicate if the data packet is a re-transmitted data packet or not, four bits ($2^4$) are therefore needed. This assumes a unique peer-to-peer communication link. For instance, in the case of an uplink transmission, the node B would have to handle simultaneously many users. Thus, the node-B would need many more signalling bits. In this regard, it is envisaged that a number of parallel communication paths can be supported using the inventive concepts described herein, without increasing the communication resource needed to support the corresponding number of feedback channels.

To obtain an accurate value of the number of bits required for the signalling, we can consider the number of Transport Format Combination Indicator (TFCI) bits that are already used to signal the transport format used in each time slot. According to the 3GPP standard document 25.212, the TFCI is ten bits long and encoded using a (32, 10) Reed Muller code.

Thus, to introduce SR H-ARQ in a current UMTS slot, using known techniques would require 32 additional bits for signalling, whereas the present invention requires no additional information bits. In UMTS, FDD mode, with a dedicated uplink (25.211) channel, the ratios between data bits and signalling bits range from 1:1 to 64:1. The present invention allows the introduction of an SR H-ARQ scheme in UMTS FDD without modifying these ratios. In contrast, a direct introduction of SR H-ARQ in UMTS would have decreased these ratios respectively to 0.8:1 and 52:1.

In a similar vein, in the case of a UMTS FDD uplink channel, employing the preferred embodiment of the present invention brings roughly a constant 21% improvement of data rates.

For the dedicated downlink case, current ratios vary from 1:1 (with data), to 39:1 (with control). If standard SR H-ARQ (without employing the inventive concepts hereinbefore described) was used, these ratios decrease to 0.6:1 to 36:1 respectively. As a result, the gain is now variable from 6% to 53%, depending upon the data rate. It is within the contemplation of the invention that the aforementioned inventive concepts are not limited to a wireless communication network and wireless unit, and may equally be applied to any communication unit capable of employing an ARQ mechanism. Furthermore, it will be appreciated that the receiver may be located in the remote terminal, i.e. a subscriber unit (UE) or a centrally located terminal, i.e. a UMTS Node-B. In addition, it is envisaged that the inventive concepts described above can be applied equally to SW, GBN and SR retransmission schemes.

In conclusion, it will be understood that the above described inventive concepts, or at least embodiments thereof, tend to provide the following advantages, singly or in combination:

(i) An SR H-ARQ (type II) error correction mechanism can be used to provide low error rate communications, offering improved performance over SW, GBN and SR HARQ type I mechanisms.

(ii) Bandwidth in the communication channel is saved, as no specific signalling is required to identify whether a received data packet is a new data packet or a re-transmitted data packet. In the UMTS frequency division duplex (FDD) scenario the increase in bandwidth required to implement a known SR H-ARQ mechanism would be between 6% and 53% in a downlink channel, and is 21% in an uplink channel.

(iii) It is a robust error correction mechanism, inasmuch as when a data packet is re-transmitted, it is always recognised as such by comparison with a previously stored data packet. Hence, there are fewer errors made in deciding whether a data packet is new or re-transmitted.

Whilst the specific and preferred implementations of the embodiments of the present invention are described above, it is clear that one skilled in the art could readily apply variations and modifications of such inventive concepts.

Thus, a communication system, a communication unit and a data communication method have been described, whereby the disadvantages associated with known prior art arrangements have been substantially alleviated.

**Claims**

1.  A method (400) for receiving one or more data packets in a data communication system, the method comprising the steps of:

    receiving one or more data packets at a receiving unit; and
    storing said one or more received data packets at said receiver unit; the method **characterised by** the steps of:

    receiving (410) one or more subsequent data packets at said receiving unit;
    calculating (420), at said receiver unit, a metric relating to a similarity between said received one or more data packets and said one or more of said stored data packets;
    comparing (430), at said receiver unit, said metric to a threshold value; and
    determining whether said received one or more data packets is one or more new data packets or one or more re-transmitted data packets.

2.  The method (400) for receiving one or more data packets in a data communication system according to Claim 1, wherein the step of calculating includes calculating (420) a Euclidean distance between said one or more received data packets and a number of said one or more stored data packets.

3.  The method (400) for receiving one or more data packets in a data communication system according to Claim 1 or Claim 2, wherein if said metric is below said threshold it is assumed that said one or more data packets is one or more re-transmitted data packets.

4.  The method (400) for receiving one or more data packets in a data communication system according to any preceding Claim, wherein if said determining step determines said one or more data packets is re-transmitted, said receiver unit performs the following steps:

    combining said received data packet with said previously stored one or more data packet; and
    decoding (460) said combined data packet to provide an improved likelihood of correctly decoding data contained therein.

5.  The method (400) for receiving one or more data packets in a data communication system according to Claim 4, the method further **characterised by** the step of:

    storing (450) said combination of said originally transmitted one or more data packet and said received one or more data packet.

6.  The method (400) for receiving one or more data packets in a data communication system according to any of preceding Claims 1 to 3, wherein if said determining step determines said one or more data packets is one or more new data packets (450), said receiver performs the following step of:

    storing (440) said received one or more data packet if said data packet is not correctly decoded (460).

7.  The method for receiving one or more data packets in a data communication system according to Claim 5 or Claim 6, the method further **characterised by** the step of:

    deleting (470) said one or more data packet from a receiver unit's storage element, if said one or more data packet is decoded successfully.

8.  The method for receiving one or more data packets in a data communication system according to any preceding Claim, the method further **characterised by** the following step:

    dynamically adjusting said threshold value to reduce a probability of misdetection of whether said subsequently received one or more data packets is one or more new data packet or one or more re-transmitted data packets, taking into account, for example, code properties and/or signal to noise ratio on a communication channel.

9.  The method for receiving one or more data packets in a data communication system according to any preceding Claim, wherein the threshold value is set in substantially one of the following ways:

(i) Using 3.5σ for a turbo code for a data packet length of less than say, 512 bits,
(ii) Using 4σ for a turbo code for a data packet length of greater than say, 512 bits, or
(iii) Using 4σ for a convolutional code.

10. The method (400) for receiving one or more data packets in a data communication system according to any preceding Claim, wherein the data communication system employs a selective repeat hybrid automatic repeat request scheme.

11. The method (400) for receiving one or more data packets in a data communication system according to any preceding Claim, wherein the data communication system is a wireless data communication system with a feedback channel.

12. The method (400) for receiving one or more data packets in a data communication system according to Claim 11, wherein the data communication system is a 3GPP/UMTS communication system.

13. The method (400) for receiving one or more data packets in a data communication system according to any preceding Claim, wherein the data communication system employs a convolutional coding or a turbo code scheme.

14. A communications system (200) adapted to support the method of any of the preceding Claims.

15. A communications unit (300) adapted to support the method of any of preceding Claims 1 to 13.

16. A storage medium storing processor-implementable instructions for controlling a processor to carry out the method of any of Claims 1 to 13.

17. A communication unit (300) for receiving one or more data packets in a data communication system, the communication unit (300) comprising:

   a receiver receiving one or more data packets; and
   a storage element (316), operably coupled to said receiver storing said one or more received data packets; the communication unit (300) **characterised by**:

   a signal processor (308), operably coupled to said receiver and said storage element (316) and configured to calculate a metric relating to a similarity between one or more subsequently received data packets and said one or more stored data packets; compare said metric to a threshold value; and determine whether said one or more subsequently received data packets is one or more new data packets or one or more re-transmitted data packets.

18. The communication unit (300) according to Claim 17, wherein the signal processor (308) calculates a Euclidean distance between said one or more subsequently received data packets and a number of said one or more stored data packets.

19. The communication unit (300) according to Claim 17 or Claim 18, wherein if said metric is below said threshold it is assumed that said one or more subsequently received data packets is one or more re-transmitted data packets.

20. The communication unit (300) according to any of preceding Claims 17 to 19, wherein if said signal processor (308) determines that said one or more subsequently received data packets is one or more re-transmitted data packets, said signal processor (308) combines said one or more subsequently received data packets with said previously stored one or more data packets; and decodes said combined one or more data packets to provide an improved likelihood of correctly decoding data contained therein.

21. The communication unit (300) according to Claim 20, wherein said storage element (316) stores said combined one or more data packets.

22. The communication unit (300) according to any of preceding Claims 17 to 19, wherein if said signal processor (308) determines that said one or more subsequently received data packets is one or more new data packets, said one or more subsequently received data packets are stored in said storage element if said data packet is not correctly decoded.

**23.** The communication unit (300) according to Claim 21 or Claim 22, further **characterised by** said signal processor deleting said one or more data packets from said storage element, if said one or more data packets is decoded successfully.

**24.** The communication unit (300) according to any preceding Claim, wherein said signal processor is configured to dynamically adjust said threshold value to reduce a probability of misdetection of whether said one or more subsequently received data packets is one or more new data packets or one or more re-transmitted data packets, taking into account, for example, code properties and/or signal to noise ratio on a communication channel.

**25.** The communication unit (300) according to any of preceding Claims 17 to 24, wherein said signal processor sets said threshold value in substantially one of the following ways:

(i) Using $3.5\sigma$ for a turbo code for a data packet length of less than say, 512 bits,
(ii) Using $4\sigma$ for a turbo code for a data packet length of greater than say, 512 bits, or
(iii) Using $4\sigma$ for a convolutional code.

**26.** The communication unit (300) according to any of preceding Claims 17 to 25, wherein said communication unit (300) employs a selective repeat hybrid automatic repeat request scheme.

**27.** The communication unit (300) according to any of preceding Claims 17 to 26, wherein said communication unit (300) is a Node-B or a UE configured for operation on a UMTS or 3GPP wireless communication system.

*FIG. 1*

*200*

*FIG. 2*

**FIG. 3**

**FIG. 4**

FIG. 5

**European Patent Office**

## EUROPEAN SEARCH REPORT

Application Number

EP 02 29 1720

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 378 099 B1 (ROWITCH DOUGLAS NEAL) 23 April 2002 (2002-04-23) <br><br> * page 1, line 62 - line 66 * <br> * column 2, line 4 - line 9 * | 1,4-6, 11, 14-17, 20-22 | H04L1/18 |
| Y | * column 2, line 59 - column 3, line 10 * <br><br><br> * column 3, line 50 - line 57 * <br> * column 4, line 30 - line 46 * <br> * figure 2 * <br>--- | 3,7,10, 12,13, 19,23, 26,27 | |
| Y | CHAKRABORTY S S ET AL: "AN ARQ SCHEME WITH PACKET COMBINING" IEEE COMMUNICATIONS LETTERS, IEEE SERVICE CENTER, PISCATAWAY,US, US, vol. 2, no. 7, 1 July 1998 (1998-07-01), pages 200-202, XP000778089 ISSN: 1089-7798 * page 200, left-hand column, line 12 - line 14 * * page 200, right-hand column, line 8 - line 14 * | 3,7,19, 23 | |
| A | * page 200, right-hand column, line 23 - line 37; figure 2 * <br><br>--- | 1,5,6, 14-17, 21,22 | TECHNICAL FIELDS SEARCHED (Int.Cl.7) <br><br> H04L |
| Y | US 6 289 003 B1 (H AUML KKINEN HANNU ET AL) 11 September 2001 (2001-09-11) * column 1, line 42 - line 53 * * column 2, line 12 - line 28 * | 10,12, 13,26,27 | |
| A | * column 6, line 4 - line 22 * <br> * column 7, line 2 - line 4 * <br> * column 7, line 60 - column 8, line 7 * <br> * column 4, line 22 - line 53; figure 4 * <br>--- <br> -/-- | 1,14-17 | |

The present search report has been drawn up for all claims

| Place of search | Date of completion of the search | Examiner |
|---|---|---|
| THE HAGUE | 5 February 2003 | Papantoniou, A |

EPO FORM 1503 03.82 (P04C01)

**European Patent Office**

## EUROPEAN SEARCH REPORT

Application Number

EP 02 29 1720

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 247 150 B1 (NIEMELA KARI) 12 June 2001 (2001-06-12) * column 1, line 44 - line 57 * * column 3, line 24 - line 44 * * column 4, line 22 - line 53; figure 4 * --- | 1,14-17 | |
| A | SINDHU P S: "RETRANSMISSION ERROR CONTROL WITH MEMORY" IEEE TRANSACTIONS ON COMMUNICATIONS, IEEE INC. NEW YORK, US, vol. COM-25, no. 5, May 1977 (1977-05), pages 473-479, XP000758757 ISSN: 0090-6778 * page 474, left-hand column, line 1-3 * * page 474, left-hand column, paragraph 3 * ----- | 1,14-17 | |

TECHNICAL FIELDS SEARCHED (Int.Cl.7)

The present search report has been drawn up for all claims

| Place of search | Date of completion of the search | Examiner |
|---|---|---|
| THE HAGUE | 5 February 2003 | Papantoniou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 29 1720

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2003

| Patent document cited in search report | | Publication date | Patent family member(s) | | Publication date |
|---|---|---|---|---|---|
| US 6378099 | B1 | 23-04-2002 | AU | 2976300 A | 18-08-2000 |
| | | | CA | 2361075 A1 | 03-08-2000 |
| | | | CN | 1359571 T | 17-07-2002 |
| | | | EP | 1147636 A1 | 24-10-2001 |
| | | | JP | 2002536874 T | 29-10-2002 |
| | | | WO | 0045544 A1 | 03-08-2000 |
| US 6289003 | B1 | 11-09-2001 | FI | 971811 A | 29-10-1998 |
| | | | AU | 7047198 A | 24-11-1998 |
| | | | BR | 9809007 A | 14-05-2002 |
| | | | CN | 1253683 T | 17-05-2000 |
| | | | EP | 0988731 A2 | 29-03-2000 |
| | | | WO | 9849796 A2 | 05-11-1998 |
| | | | JP | 2001522552 T | 13-11-2001 |
| US 6247150 | B1 | 12-06-2001 | FI | 981544 A | 04-01-2000 |
| | | | AU | 732801 B2 | 03-05-2001 |
| | | | AU | 4912299 A | 24-01-2000 |
| | | | CN | 1273725 T | 15-11-2000 |
| | | | EP | 0993713 A1 | 19-04-2000 |
| | | | WO | 0002341 A1 | 13-01-2000 |
| | | | JP | 2002520904 T | 09-07-2002 |
| | | | NO | 20001076 A | 02-03-2000 |